# EUROPÄISCHE PATENTSCHRIFT

(11) **EP 1 747 121 B1**
(45) Veröffentlichungstag und Bekanntmachung des Hinweises auf die Patenterteilung: **25.08.2010**
(21) Anmeldenummer: 05742769.2
(22) Anmeldetag: 21.04.2005
(51) Int. Cl.: B60R 21/01

(54) **VERFAHREN ZUM STEUERN EINER SICHERHEITSRELEVANTEN KOMPONENTE EINES KRAFTFAHRZEUGS UND KRAFTFAHRZEUG MIT EINEM PRÄVENTIV AUSLÖSENDEN SICHERHEITSSYSTEM**
METHOD FOR CONTROLLING A SAFETY-RELEVANT COMPONENT OF A MOTOR VEHICLE AND MOTOR VEHICLE COMPRISING A PREVENTIVELY ACTIVATED SAFETY SYSTEM
PROCEDE POUR COMMANDER UN COMPOSANT DE VEHICULE AUTOMOBILE INFLUANT SUR LA SECURITE, ET VEHICULE AUTOMOBILE COMPORTANT UN SYSTEME DE SECURITE A DECLENCHEMENT PREVENTIF

(30) Priorität: 30.04.2004 DE 102004021174
(43) Veröffentlichungstag der Anmeldung: 31.01.2007
(73) Patentinhaber: Daimler AG, 70327 Stuttgart (DE)
(72) Erfinder: BRAUNER, Horst, 71144 Steinenbronn (DE); KIESSLING, Lutz, 71069 Sindelfingen (DE); RÖHM, Hans, 72218 Wildberg (DE); SCHINDLER, Wolfgang, 75233 Tiefenbronn (DE)
(74) Vertreter: JENSEN & SON
(86) Internationale Anmeldenummer: PCT/EP2005/004294
(87) Internationale Veröffentlichungsnummer: WO 2005/108173

(56) Entgegenhaltungen:
- EP-A- 1 527 960
- WO-A-2004/085220
- WO-A-2005/021337
- DE-A1- 19 749 857
- US-B1- 6 522 287

## Beschreibung

Die Erfindung betrifft ein Verfahren zum Steuern wenigstens einer sicherheitsrelevanten Komponente eines Kraftfahrzeugs der im Oberbegriff des Patentanspruches 1 oder 9 näher definierten Art.

Aus der Praxis bekannte Kraftfahrzeuge, insbesondere Personenkraftwagen, sind mit aktiven und passiven Sicherheitseinrichtungen ausgeführt, die einen Fahrer unterstützen, dass er sein Fahrzeug auch in sicherheitskritischen Fahrsituationen besser beherrschen kann, und die den Körper von Insassen und gegebenenfalls Unfallpartnern schützen.

Besondere Bedeutung kommt dabei präventiv auslösenden Sicherheitssystemen zu, die auch als Pre-Safe-System (eingetragene Marke) bekannt sind und die bereits vor einer möglichen Kollision präventiv wirksam sind und einen Zeitraum ab Erkennen einer hohen Unfallwahrscheinlichkeit durch entsprechende Detektionssysteme bis zum eigentlichen Aufprall dazu nutzen, den Insassenschutz durch zusätzliche Sicherheitsmaßnahmen zu erweitern und so die Unfallschwere zu mindern. Hierbei werden zur Erkennung möglicher Unfallsituationen Informationen genutzt, die von verschiedenen Sensoreinrichtungen des Kraftfahrzeuges, welche z. B. Bestandteil eines elektronischen Fahrstabilisierungsprogramms sein können, bereitgestellt werden. In Abhängigkeit von der erkannten Situation werden dann Rückschlüsse auf einen möglichen Aufprall gezogen und entsprechende Maßnahmen zur Konditionierung des Fahrzeugs und von Rückhaltesystemen für Insassen auf die bevorstehende Verunfallung hin eingeleitet.

Ein Pre-Safe-System, bei dem mittels einer Sensorik Fahrzustandsdaten erfasst werden und das ein reversibles Insassenschutzsystem aufweist, welches vor einem Kollisionszeitpunkt aktiviert und dadurch in Wirkstellung gebracht werden kann, ist aus der DE 101 21 386 C1 bekannt. Die Fahrzustandsdaten werden hier mittels einer Sensorik hinsichtlich einer etwaigen Notbremsung, eines etwaigen Übersteuerns oder eines eventuellen Untersteuerns überwacht. Wenn eine Notbremsung, ein Übersteuern und/oder ein Untersteuern erkannt wird, erfolgt eine Aktivierung des Insassenschutzsystems, wobei das Insassenschutzsystem nur bei Überschreiten einer Mindestgeschwindigkeit ausgelöst werden kann. Die Sensorik zur Erfassung der Fahrzustandsdaten kann einen Lenkwinkelsensor, einen Pedalwegsensor, einen Bremsdrucksensor, einen Raddrehzahlsensor, einen Beschleunigungssensor und einen Gierratensensor umfassen.

Nachteilhafterweise wird das aus der DE 101 21 386 C1 bekannte Insassenschutzsystem jedoch stets bei gleichen Auslöseschwellenwert aktiviert, weshalb es bei niedrigen Fahrzeuggeschwindigkeiten ein vergleichsweise empfindliches Auslöseverhalten und bei hohen Fahrzeuggeschwindigkeiten ein vergleichsweise unempfindliches Auslöseverhalten aufweist.

Aus der DE 197 49 857 A1 ist ein Verfahren zum Umschalten des Betriebszustandes eines Steuergerätes für Rückhaltesysteme (Airbags und Gurte) aus einem Bereitschaftszustand in einen Aktivzustand bekannt. Es wird die Betätigung wenigstens eines Bedienelements, z.B. Gaspedal, Bremspedal oder Lenkrad des Fahrzeugs von einem Sensor erfasst. Das Umschalten erfolgt, wenn bei der Betätigung wenigstens ein vorgegebener Schwellwert überschritten wird. Im Bereitschaftszustand befindet sich das Steuergerät in einem Schlafzustand, bei dem lediglich Diagnosefunktionen zur Funktionstüchtigkeitsüberprüfung des Rückhaltesystems durchgeführt werden. Im Aktivzustand werden Algorithmen für eine mögliche Auslösung des Rückhaltesystems gestartet. Damit ist es möglich, den Betriebszustand des Steuergerätes zu einem frühen Zeitpunkt vor einem Crash aus dem Bereitschaftszustand in den Aktivzustand umzuschalten, so dass mehr Zeit zur Berechung einer optimalen Auslösung des jeweiligen Rückhaltesystems zur Verfügung steht. Eine Auslösung eines Airbags oder eines Gurtstraffers findet jedoch erst statt, wenn die zunächst als kritisch eingestufte Situation auch tatsächlich zu einem Unfall führt.

Die nach dem Prioritätszeitpunkt der vorliegenden Anmeldung veröffentlichte WO 2005/021337 A1 offenbart ein Kraftfahrzeug mit einem Pre-Safe-System, welches Sicherheitseinrichtungen umfasst und Informationen einer Fahrzeugumgebungs-Erkennungseinrichtung und einer Fahrsituationsdaten-Erfassungseinrichtung auswertet. Die Aktivierung wenigstens eines Teils der Sicherheitseinrichtungen erfolgt, wenn die Informationen der Fahrzeugumgebungs-Erkennungseinrichtung ein potentielles Kollisionsobjekt repräsentieren und die Daten der Fahrsituationsdaten-Erfassungseinrichtung ein Fahrerverhalten repräsentieren, welches für eine Kollisionsplausibilisierung vordefiniert ist. In gleicher Weise sind die nachveröffentlichten EP 1 527 960 A2 und WO 2004/085 220 A1 zu beachten.

Aus der DE 100 29 061 A1 ist ein Insassenschutzsystem mit einem elektromotorischen Gurtstraffer zum Straffen eines Sicherheitsgurts und mit einer Steuervorrichtung zur Ansteuerung des Gurtstraffers bekannt. Die Steuervorrichtung ermittelt in Abhängigkeit verschiedener eine Fahrdynamik charakterisierender Betriebszustandsgrößen, wie einer Fahrzeuggeschwindigkeit, eines Gierwinkels, einer Gier-, Quer- und Längsbeschleunigung und Stellgrößen, wie Pedalweg, Pedalkraft oder Fahrzeuglenkwinkel, ob eine potentielle Unfallsituation vorliegt. Die vorgenannten Betriebszustandsgrößen werden ausgewertet, um entsprechende Schwellenwerte für die zur Ermittlung einer potentiellen Unfallsituation vorgesehenen Indikatorsignale zu erstellen oder diese zu ändern. Wenn das aus den Indikatorsignalen abgeleitete tatsächliche Fahrverhalten des Fahrzeugs von dem gewünschten Fahrverhalten abweicht, wird von einer Auswerteeinrichtung eine potentielle Unfallsituation festgestellt und der elektrische Strafferantrieb zum Straffen des Sicherheitsgurtes angesteuert.

Darüber hinaus ist es vorgesehen, dass die Schwellenwerte mittels einer Selbstlernlogik in Abhängigkeit von der Brems- und Beschleunigungsaktivität des jeweiligen Fahrers angepasst werden. Ferner wird vorgeschlagen, die Schwellenwerte in Abhängigkeit von der jeweiligen Fahrzeuggeschwindigkeit in der Auswerteeinrichtung anzupassen, um eine Anpassung an die Fahrweise des Fahrers, z. B. an sportliches oder zügiges Fahren oder an eine langsame, gemächliche Fahrweise, zu erreichen. Zur Einstellung der Schwellenwerte können die entsprechenden Speicherplätze eines Schwellenwertspeichers mit einer Selbstlernlogik verbunden sein. Diese Selbstlernlogik erfasst die individuelle Fahrgewohnheit des Kraftfahrzeuglenkers, insbesondere im Hinblick auf Brems- und Beschleunigungsaktivität.

Bei einem derartigen Insassenschutzsystem können nachteilhafterweise unerwünschte Auslösevorgänge von Insassenschutzmitteln auftreten, d. h., dass beispielsweise ein Straffen des Sicherheitsgurtes erfolgt, ohne dass dies die Fahrsituation erfordert und insbesondere ohne dass dies dem Fahrer oder anderen Fahrzeuginsassen angemessen erscheint. Dies wird zunächst auch durch die mittels der Selbstlernlogik anpassbaren und damit veränderbaren Schwellenwerte nicht verhindert, da unerwünschte Auslösevorgänge bei Vorliegen sicherheitskritischer und von einem Fahrer bewusst herbeigeführter Fahrsituationen, wenn überhaupt, erst nach einer gewissen Anpassungszeit vermieden werden.

Der vorliegenden Erfindung liegt daher die Aufgabe zugrunde, ein Verfahren zum Steuern wenigstens einer sicherheitsrelevanten Komponente eines Kraftfahrzeugs sowie ein Kraftfahrzeug mit wenigstens einer über eine Steuereinrichtung ansteuerbaren sicherheitsrelevanten Komponente zur Verfügung zu stellen, mit denen eine Anzahl an unerwünschten Auslösevorgänge im Vergleich zu aus dem Stand der Technik bekannten Fahrzeugsystemen reduzierbar ist.

Erfindungsgemäß wird diese Aufgabe mit einem Verfahren gemäß den Merkmalen des Patentanspruches 1 bzw. 9 gelöst.

Das erfindungsgemäße Verfahren zum Steuern von wenigstens einer sicherheitsrelevanten Komponente eines Kraftfahrzeugs bietet die Möglichkeit, eine unerwünschte und/oder eine unnötige Ansteuerung der sicherheitsrelevanten Komponente zu verhindern oder zumindest die Wahrscheinlichkeit dafür zu verringern, so dass der Fahrer, aber auch andere Fahrzeuginsassen oder eventuelle Kollisionspartner, wie beispielsweise ein Fußgänger, nicht irritiert oder unnötig belästigt werden.

Dies wird dadurch erreicht, dass die Adaption des Schwellwerts derart an die fahrerseitige Leistungsanforderung gekoppelt ist, dass die Ansteuerung der sicherheitsrelevanten Komponente erst dann erfolgt, wenn eine aus der aktuellen fahrerseitigen Leistungsanforderung resultierende sicherheitskritische Fahrdynamik als ein unwillkürlich und unkontrolliert herbeigeführter Fahrzustand bewertet wird.

Das bedeutet, dass der Schwellwert in Abhängigkeit einer Stellung eines Gaspedals derart verändert wird, dass bei sportlicher Fahrweise, bei der unter bestimmten Umständen vordefinierte Auslöseschwellen überschritten werden, ohne dass wirklich eine sicherheitskritische Fahrsituation vorliegt, eine Ansteuerung der sicherheitsrelevanten Komponente vermieden wird.

Die Adaption des Schwellwertes kann in einer bevorzugten Ausführung des erfindungsgemäßen Verfahrens mittels einer beliebigen Funktion, z. B. einer Rampenfunktion oder auch einer Sprungfunktion, erfolgen.

Bei einer weiterführenden Variante des erfindungsgemäßen Verfahren kann der Tatsache Rechnung getragen werden, dass ein Fahrer, der sich tatsächlich in einer kritischen Fahrsituation befindet, mit hoher Wahrscheinlichkeit eine Leistungsanforderung vorzugsweise durch eine Verringerung des Gaspedalwinkels reduziert oder sogar bei nicht betätigtem Gaspedal eine Bremsung ausführt.

Dies wird wiederum dadurch erreicht, dass während des Vorliegens einer sicherheitskritischen Fahrdynamik und bei Überschreiten einer vordefinierten und vorzugsweise adaptierbaren fahrerseitigen Reduzierung der Leistungsanforderung die das Verletzungsrisiko reduzierende Ansteuerung der Komponente erfolgt, da der Schwellwert in entsprechender Art und Weise abgesenkt wird, so dass der Schwellwert überschritten wird und eine Ansteuerung der Komponente erfolgt.

Bei einem erfindungsgemäß ausgeführten Kraftfahrzeug ist eine Anzahl unerwünschter Auslösevorgänge im Vergleich zu herkömmlich ausgeführten Kraftfahrzeugen vorteilhafterweise reduziert.

Dieser Vorteil wird dadurch erzielt, dass die Adaption des Schwellwerts derart in Abhängigkeit einer fahrerseitigen Leistungsanforderung erfolgt, dass eine Ansteuerung der Komponente nur dann erfolgt, wenn eine ermittelte Fahrdynamik einem unwillkürlich und unkontrolliert herbeigeführten Fahrzustand entspricht.

Im vorliegenden Fall wird unter dem Begriff Fahrdynamik das Teilgebiet der technischen Mechanik, d. h. der Fahrzeugmechanik, verstanden, das sich mit den auf ein Fahrzeug einwirkenden Kräften und den daraus resultierenden Fahrzeugbewegungen befasst, wobei die Fahrdynamik grundsätzlich in die Längsdynamik, die Querdynamik und die Vertikaldynamik unterteilbar ist. Dabei befasst sich die Längsdynamik mit dem Zusammenwirken von Antriebs- oder Bremskräften an den Rädern und mit den Fahrwiderständen in Abhängigkeit von den Strecken- und Betriebsverhältnissen. Die Querdynamik betrachtet die Kräfte, wie Seitenwind oder Fliehkräfte, die das Fahrzeug von der Fahrtrichtung ablenken. Ein Ausgleich dieser Kräfte kann nur durch Seitenführungskräfte der Reifen bzw. Räder erfolgen, wobei das gummibereifte Rad gegenüber seiner Mittelebene unter einem entsprechenden Schräglaufwinkel rollt. Von Einfluss sind auch die dynamische Radlast, die Antriebs- und Bremskräfte sowie die Reibungseigenschaften der Fahrbahn. Je nach Lage des Schwerpunkts, des Angriffspunkts der Windkräfte, der Konstruktion der Radaufhängung und der Reifenbeschaffenheit ergeben sich Fahreigenschaften, die zusammen mit den Lenkreaktionen des Fahrers auf das Fahrverhalten, die Fahrtrichtungshaltung bei Geradeaus- und die Fahrstabilität bei Kurvenfahrt schließen lassen. Die Vertikaldynamik untersucht die senkrechten Kräfte und Bewegungen, die durch die Unebenheiten der Straße erzeugt werden und unter Zwischenschaltung von Reifen- und Wagenfederung Hubschwingungen und Nickschwingungen um die Querachse erzeugen, die mit Hilfe von Schwingungsdämpfern reduziert werden. Bei Kurvenfahrt ergibt sich ein von der Achsanordnung abhängiges Wanken um die Längsachse, dass durch Stabilisatoren beeinflusst werden kann.

Durch den Einsatz elektronischer Regelsysteme wird versucht die Fahrdynamik zu verbessern, wobei die Längsdynamik beispielsweise durch ein Antiblockiersystem, die Querdynamik beispielsweise durch eine Fahrdynamikregelung mit gezielter Beeinflussung der Giermomente durch einen Bremseingriff sowie die Vertikaldynamik durch eine Verringerung der Wankneigung des Fahrzeugaufbaus und eine Beeinflussung der Dämpfungseigenschaften durch elektronische Fahrwerkregelung beeinflusst werden kann.

Des Weiteren stellt der Begriff "sicherheitsrelevante Komponente" vorliegend einen generischen Begriff für Fahrzeugkomponenten dar, mittels welchen entweder in der vorbeschriebenen Art und Weise die Fahrdynamik des Kraftfahrzeuges im Hinblick auf ein Crashverhalten beeinflussbar ist oder mittels welchen eine Sicherheit eines Fahrzeuginsassen oder eines Kollisionspartners verbesserbar ist. So können die Fahrzeugkomponenten auch als ansteuerbare Insassenschutzmittel, wie gängige Rückhaltemittel, ausgeführt sein, welche eine Rückhaltewirkung und/oder eine Energie absorbierende Wirkung zum Schutze eines Insassen bei einer Kollision entfalten. Beispiele hierfür sind Sicherheitsgurtstraffer, Airbags, eine Sitzverstellung, verfahrbare Prallkörper, Kissen und Kopfstützen, welche mittels einer Ansteuerung in Größe, Härte, Form und Lage verändert werden können. Selbstverständlich fallen unter den Begriff sicherheitsrelevante Komponente auch so genannte Partnerschutzmittel, wie eine in der Neigung verstellbare Motorhaube oder ein ausfahrbares Fußgängeraufpralldämpfungselement. Auch die Ansteuerung zum Schließen eines Schiebedachs oder der Seitenscheiben in eine kollisionsoptimale Position stellen eine sicherheitsrlevante Komponente im Sinne der Erfindung dar.

Weitere Vorteile und vorteilhafte Ausgestaltungen des Gegenstandes gemäß der Erfindung sind der Beschreibung, der Zeichnung und den Patentansprüchen entnehmbar.

In der der Zeichnung ist prinzipmäßig ein Ausführungsbeispiel der Erfindung dargestellt, welches in der nachfolgenden Beschreibung näher erläutert wird.

Dabei zeigen
- Fig. 1: ein Ausführungsbeispiel eines erfindungsgemäß ausges- talteten Kraftfahrzeuges; und
- Fig. 2: ein verkürzt ausgeführtes Blockschaltbild einer Steu- ereinrichtung eines Pre-Safe-Systems des Kraftfahrzeuges der Fig. 1.

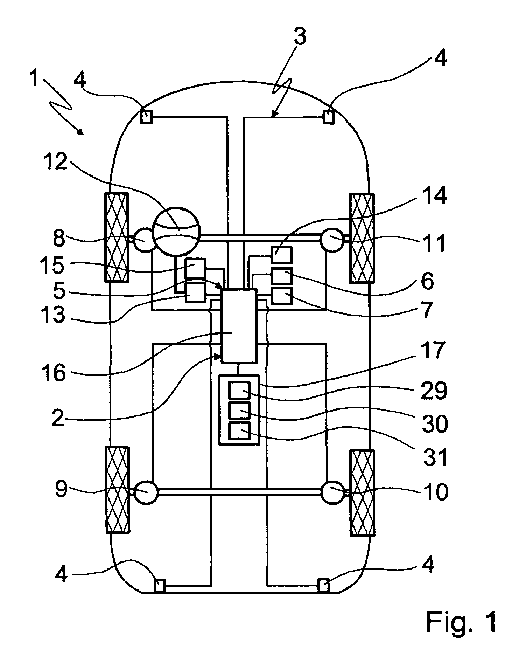

In Fig. 1 ist eine stark schematisierte Draufsicht eines Kraftfahrzeuges 1 dargestellt, das als Personenkraftwagen oder auch als Nutzkraftwagen ausgeführt sein kann und mit einem Pre-Safe-System 2 ausgestattet ist.

Das Pre-Safe-System 2 weist eine Sicherheitssensorik 3 auf, die mit einer Fahrzeugumgebungs-Erkennungseinrichtung 4 und einer Fahrsituations-Erfassungseinrichtung 5 zusammenwirkt. Die Fahrsituations-Erfassungseinrichtung 5 ist wiederum mit einer Fahrzustandssensorik 6 versehen, die unter anderem zur Erkennung eines Übersteuerns und/oder eines Untersteuerns des Kraftfahrzeuges 1 dient. Zu diesen Zwecken werden unter anderem Informationen bzw. Daten genutzt, die von Raddrehzahlsensoren 8, 9, 10 und 11, von einem im Bereich eines Lenkrads 12 angeordneten Lenkwinkelsensor 13, von einem Längsbeschleunigungssensor 14 sowie einem Querbeschleunigungssensor 15 geliefert werden.

Die Fahrzustandssensorik 6 ist auch einer Fahrdynamikfunktionalität 7, wie beispielsweise einem Antiblockiersystem und/oder einem elektronischen Stabilitätsprogramm, zugeordnet. Im Normalbetrieb des Kraftfahrzeuges kann die Fahrzustandssensorik 6 zu diesem Zwecken weitere wichtige fahrdynamische Größen, wie beispielsweise eine Fahrzeuggeschwindigkeit, eine Gierrate, einen Ein- und Ausfederweg, das Fahrzeugniveau, eine Gaspedalbewegung, eine Gaspedalstellung, eine Bremspedalstellung, eine Bremspedalbewegung, eine Lenkradgeschwindigkeit und/oder eine Lenkradbeschleunigung analysieren. Dabei werden Ist-Werte dieser Größen mit vorgegeben Soll-Werten und Schwell-Werten verglichen. Aufgrund dieser Vergleiche werden beispielsweise das Antiblockiersystem und/oder das elektronische Stabilitätsprogramm aktiviert.

Die von den Sensoren 14 und 15 ermittelten Längs- und Querbeschleunigungen sowie die jeweilige mittels der Raddrehzahlsensoren 8 bis 11 ermittelte Fahrzeuggeschwindigkeit werden zur Nutzung bzw. Aktivierung des Pre-Safe-Systems 2 in einer Datenauswerteeinrichtung 16 ausgewertet, wobei ein Vergleich mit einem Schwellwert erfolgt. Dies bedeutet, dass das Pre-Safe-System 2 bei Überschreiten des Schwellwerts bzw. Auslöseschwellwerts aktiviert wird und wenigstens eine Auswahl vorhandener Sicherheitseinrichtungen 17 des Kraftfahrzeuges angesteuert wird. Die Sicherheitseinrichtungen umfassen im vorliegenden Fall insbesondere Airbags 29, einen Gurtstraffer 30 sowie eine Ansteuerung einer elektrischen Sitzverstelleinrichtung 31, welche alle sicherheitsrelevante Komponenten im Sinne der Erfindung darstellen.

Der in der Datenauswerteeinrichtung 16 abgelegte Auslösealgorithmus ist so ausgelegt, dass eine Anpassung des Auslöseschwellwerts des Pre-Safe-Systems 2 in Abhängigkeit von einer Gaspedalstellung erfolgt. Die Anpassung des Auslöseschwellwerts erfolgt dabei wenigstens im Wesentlichen kontinuierlich, und zwar derart, dass er mit zunehmendem Gaspedalwinkel erhöht wird. Dies bedeutet, dass das Pre-Safe-System 2 bei einem großen Gaspedalwinkel erst bei einem hohen Auslöseschwellwert aktiviert wird.

Die Aktivierung aller oder einzelner Sicherheitseinrichtungen 17 erfolgt, wenn die Datenauswerteeinrichtung 16 ausgehend von den mittels der Fahrzustandssensorik 6 und/oder von der Fahrzeugumgebungs-Erkennungseinrichtung 4 detektierten Informationen die Möglichkeit einer Verunfallung des Kraftfahrzeuges 1 ermittelt, beispielsweise infolge eines Ausbrechens des Fahrzeugs aufgrund unzulässig hoher Betriebszustandsgrößen der Fahrdynamik. Dabei ist insbesondere auch die Information über eine Fahrbahnbeschaffenheit, d. h. über einen Fahrbahnreibwert, von entscheidender Bedeutung.

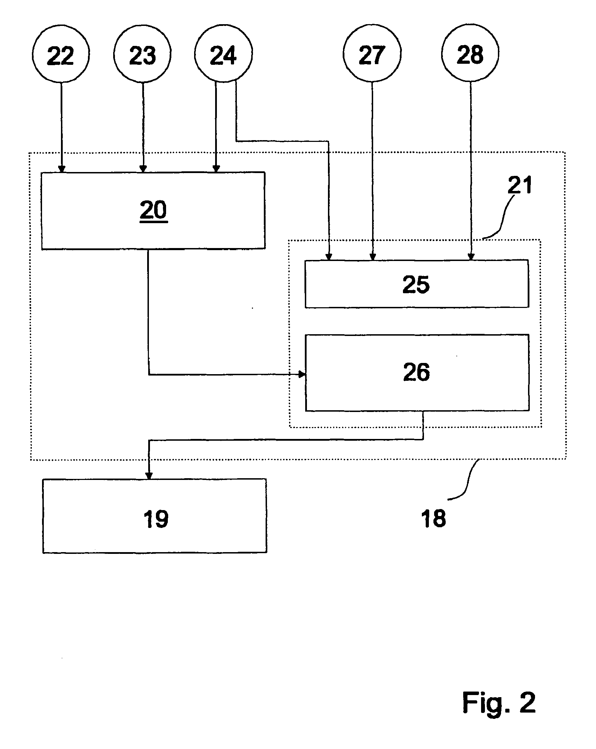

Die Fig. 2 zeigt ein Blockschaltbild einer Steuereinrichtung 18 zur Ansteuerung eines eine sicherheitsrelevante Komponente darstellenden Insassenschutzmittels 19. Die Steuervorrichtung 18 umfasst eine Entscheidungsstufe 20 und eine Bewertungsstufe 21.

Die Entscheidungsstufe 20 erfasst Größen 22, 23 und 24, insbesondere fahrdynamische Größen, welche beispielsweise von Steuergeräten und Sensoren wie einem ABS-Regelsteuergerät, einem Raddrehzahlsensor, einem Gierratensensor oder einem Umgebungssensor stammen. Mittels der erfassten Größen 22, 23, 24 ermittelt die Entscheidungsstufe 20, ob ein sicherheitskritisches Fahrverhalten des Fahrzeugs vorliegt, und gibt gegebenenfalls eine dem sicherheitskritischen Fahrverhalten entsprechende Auslöseentscheidung für das Insassenschutzmittel 19 aus. Die Auslöseentscheidung kann aus einem einfachen Signal zur Aktivierung des Insassenschutzmittels 19 bestehen, oder zusätzlich den Auslösezeitpunkt, die Auslösecharakteristik, die Auslösegeschwindigkeit, die Auslösestärke und die Ansteuerungsdauer des Insassenschutzmittels 19 umfassen.

Die Bewertungsstufe 21 umfasst eine erste Teilstufe 25 zur Ermittlung eines Wunschfahrverhaltens, d. h. eines vom Fahrer absichtlich und kontrolliert herbeigeführten Fahrverhaltens des Fahrzeugs, und eine zweite Teilstufe 26 zur Bewertung der Auslöseentscheidung, ob eine Ansteuerung des Insassenschutzmittels 19 erfolgt oder nicht.

Zur Ermittlung des Wunschfahrverhaltens zieht die erste Teilstufe 25 im Fahrzeug erfasste Größen 24, 27, 28, wie beispielsweise den Lenkwinkel, die Raddrehzahlen, den Gas- und Bremspedalweg und die Gierrate und/oder den zeitlichen Verlauf dieser Größen heran. Insbesondere können zur Bewertung auch Größen herangezogen werden, die von der Entscheidungsstufe 20 nicht berücksichtigt werden. Das ermittelte wunschfahrverhalten wird an die zweite Teilstufe 26 übermittelt.

Die zweite Teilstufe 26 erfasst das von der ersten Teilstufe 25 ermittelte Wunschfahrverhalten und das von der Entscheidungsstufe 20 übermittelte sicherheitskritische Fahrverhalten, und vergleicht, ob das Wunschfahrverhalten innerhalb vorgebbarer Grenzen dem sicherheitskritischen Fahrverhalten entspricht. Ist dies der Fall, so bewertet die zweite Teilstufe 26 die auf dem sicherheitskritischen Fahrverhalten basierende Auslöseentscheidung als unplausibel, und verhindert ein auf dieser Auslöseentscheidung basiertes Ansteuern des Insassenschutzmittels 19.

Es können die erste und zweite Teilstufe auch als eine einzige Stufe ausgelegt sein, welche die erfassten Größen 24, 27, 28 und die von der Entscheidungsstufe 20 ermittelte Auslöseentscheidung und/oder das ermittelte sicherheitskritische Fahrverhalten heranzieht.

Wird von der Bewertungsstufe 21 die Auslöseentscheidung als plausibel eingestuft oder ist zumindest die ermittelte Plausibilität groß genug, so führt dies zur Freigabe der Auslöseentscheidung und zur Ansteuerung des Insassenschutzmittels 19. Die Ansteuerung kann direkt durch die Bewertungsstufe 21 erfolgen.

Alternativ hierzu wird von der Bewertungsstufe 21 eine direkte Ansteuerung des Insassenschutzmittels 19 durch die Steuereinrichtung 18, insbesondere durch die Entscheidungsstufe 20 oder eine dafür vorgesehene Steuerstufe freigegeben.

Als Eingangssignal der Entscheidungsstufe 20 wird insbesondere ein Ausgangssignal eines Fahrdynamikregelsystems und/oder ein Ausgangssignal eines Bremsassistenzsystems herangezogen. Beispielsweise wird eine Auslöseentscheidung dann getroffen, wenn ein vorgebbares Signal eines Fahrdynamikregelsystems und/oder eines Bremsassistenzsystems erfasst wird.

Wesentlich bei der erfindungsgemäßen Bewertung der Auslöseentscheidung ist die Erkennung eines vom Fahrer willentlich und kontrolliert herbeigeführten Fahrverhaltens des Kraftfahrzeugs 1, und hierbei insbesondere die Unterscheidung eines vom Fahrer willentlich herbeigeführten Fahrverhaltens von einem auf Reflexhandlungen und schnellen Reaktionshandlungen beruhenden Fahrverhalten und/oder von einem nicht vom Fahrer aktiv herbeigeführten Fahrverhalten.

Es ist besonders vorteilhaft, wenn die Bewertung der aktuellen Fahrdynamik schnell erfolgt. Um eine sehr schnelle Bewertung zu ermöglichen, ist es vorgesehen, dass ein Wunschfahrverhalten parallel oder zumindest nahezu zeitgleich zur Auslöseentscheidung durch Betrachten eines begrenzten zurückliegenden Zeitraums von beispielsweise 5 s oder 1 min ermittelt wird, d. h. unter Heranziehen von in diesem Zeitraum erfassten oder diesen Zeitraum beschreibenden Betriebszustandsgrößen. Hierdurch kann eine Auslöseentscheidung in Echtzeit, d. h. ohne wesentlichen Zeitverzug zuverlässig getroffen werden.

Zur Überprüfung, ob es sich bei dem sicherheitskritischen Fahrverhalten um ein vom Fahrer gewollt und kontrolliert herbeigeführtes Wunschfahrverhalten handelt, werden insbesondere vom Fahrer vorgegebene Steuer- und Stellgrößen wie z. B. Lenkwinkel und Pedalstellung, und insbesondere die zeitliche Änderung der Steuer- und Stellgrößen, sowie vom Fahrer vorgegebene Systemeinstellungen, wie z. B. der Status oder das Ein- und Ausschalten einer Antriebsschlupfregelung oder eines Fahrdynamikregelsystems, herangezogen. Auch fahrer- und fahrstreckenbezogene Größen, wie Fahrstil oder übliche Routenwahl können zur Ermittlung des Wunschfahrverhaltens herangezogen werden.

Insbesondere aus dem zeitlichen Verlauf einer Gaspedalbetätigung, beispielsweise aus der Amplitude, der Häufigkeit oder der Geschwindigkeit einer zeitlichen Veränderung der Gaspedalstellung, und dabei vor allem aus der Geschwindigkeit eines Loslassens des Gaspedals, sowie von einem Zeitraum zwischen einem Lösen des Gaspedals und einer Betätigung des Bremspedals kann auf ein Wunschfahrverhalten geschlossen werden. So kann ein schnelles Loslassen des Gaspedals als Vorliegen einer Erkennung einer Gefahr durch den Fahrer gewertet werden, womit die sicherheitskritische Fahrsituation als nicht mehr dem Fahrerwunsch entsprechend zu werten ist. Eine Auslösung der Sicherheitseinrichtungen 17 bzw. des Insassenschutzmittels 19 ist somit in einer derartigen Situation plausibel.

Auf das ungewollte Vorliegen einer sicherheitskritischen Fahrsituation kann auch durch Auswertung von Körperreaktionen erfassenden Sensoren geschlossen werden, welche an sich zur Erfassung einer Not- bzw. Stresssituation z. B. anhand einer Sensierung eines Transpirationsverhaltens, eines Herzschlages oder einer Pupillenveränderung bekannt sind.

Des Weiteren kann eine aktuelle Fahrdynamik unter Berücksichtigung der fahrerseitigen Leistungsanforderung dadurch bewertet werden, dass eine zeitliche Änderung einer die Fahrdynamik kennzeichnenden Größe betrachtet wird. Das bedeutet, dass eine Fahrdynamik als ein willkürlich und kontrolliert herbeigeführtes Fahrverhalten bewertet wird, falls die zeitliche Änderung der die Fahrdynamik kennzeichnenden Größe eine vorgebbare Änderungsgeschwindigkeitsschwelle unterschreitet. So wird beispielsweise bei einer langsamen, d. h. nicht sprunghaft und über einen längeren Zeitraum von z. B. mehreren Sekunden anwachsenden Gierrate eine Auslöseentscheidung aufgrund eines erfassten, über einem Schwellwert liegenden Gierratenwertes als unplausibel verworfen, da auf einen durch den Fahrer willentlich und kontrolliert herbeigeführten Fahrzustand geschlossen wird. Unkontrollierte Fahrzustandsänderungen, z. B. Fahrzustandsänderungen, durch die der Fahrer überrascht wird, führen dagegen weiterhin zu einer Auslösung des Insassenschutzmittels 19.

Bei einer vorteilhaften Variante des erfindungsgemäßen Verfahrens wird von einer aktuellen Fahrdynamik auf ein Fahrerwunsch-Fahrverhalten geschlossen, wenn innerhalb eines vorgebbaren Zeitintervalls eine vergleichbare Fahrsituation in vorgebbarer Häufigkeit vorliegt. Erfolgt beispielsweise zum dritten Mal innerhalb eines Zeitintervalls von zwei Minuten eine Notbremsung, wobei jeweils die Ausgangsgeschwindigkeit zu Bremsbeginn zwischen 60 und 80 km/h lag, so wird auf ein Fahrerwunsch-Fahrverhalten geschlossen.

Ebenso können ein Unter- oder Übersteuern und weitere sicherheitskritische Fahrzustände mit anderen Ausgangsgeschwindigkeitsbereichen nicht zu einer Ansteuerung der sicherheitsrelevanten Komponenten führen. Voraussetzung dafür ist, dass eine vorgebbare Anzahl an Wiederholungen einer sicherheitskritischen Fahrsituation innerhalb eines vorgebbaren Zeitraums stattfindet.

Um die Zuverlässigkeit einer Bewertung der aktuellen Fahrdynamik zu erhöhen, können zusätzlich weitere Kriterien überprüft werden. So kann z. B. bei einer innerhalb weniger Minuten wiederholt auftretenden Notbremssituation zusätzlich überprüft werden, ob der Lenkwinkel oder die Gierrate einen gleichen oder zumindest einen ähnlichen Wert in jeder Notbremssituation aufweisen. Nur wenn dies erfüllt ist, wird auf eine Fahrerwunsch-Fahrsituation geschlossen, und die Ansteuerung der sicherheitsrelevanten Komponenten, welche aufgrund der Notbremssituation erfolgen würde, unterbleibt.

Des Weiteren besteht die Möglichkeit, Sonderfahrsituationen zu definieren, so dass bei Vorliegen einer vorgegebenen Sonderfahrsituation eine Ansteuerung der sicherheitsrelevanten Komponenten verhindert wird. Das Vorliegen einer Sonderfahrsituation ist beispielsweise anhand eines für diese Sonderfahrsituation charakteristischen vorgebbaren Fahrdynamikmusters erkennbar. Ein vorgebbares Fahrdynamikmuster bedeutet, dass für einen Satz von Fahrdynamikgrößen ein Wertebereich festgelegt ist und die Werte verschiedener Fahrdynamikgrößen in einer festgelegten Beziehung zueinander stehen, also die Wertebereiche einen vorgebbaren Zusammenhang aufweisen. Alternativ oder ergänzend hierzu können Sonderfahrsituationen auch durch Stellgrößen wie Lenkwinkel und Gaspedalstellung charakterisiert werden.

Weiterhin können Sonderfahrsituationen auch durch Umgebungsgrößen definiert werden, wie beispielsweise durch die Außentemperatur, die Straßenverhältnisse, den Reibbeiwert zwischen Reifen und Fahrbahn, die mittels eines Positionserfassungssystems erfasste Position des Fahrzeugs, den Abstand zu einem vorausfahrenden Fahrzeug oder zu Objekten in der Umgebung des Fahrzeugs, oder den Straßentyp (Autobahn, Dorfstraße, etc.).

In Abhängigkeit dieser Größen ist ermittelbar, ob das sicherheitskritische Fahrverhalten einem Wunschfahrverhalten entspricht.

## Patentansprüche

1. Verfahren zum Steuern wenigstens einer sicherheitsrelevanten Komponente eines Kraftfahrzeugs in Abhängigkeit einer über Sensoren detektierten Fahrdynamik des Kraftfahrzeugs, wobei die Ansteuerung der sicherheitsrelevanten Komponente in Abhängigkeit wenigstens eines vordefinierten und adaptierbaren sowie eine fahrsicherheitskritische Fahrdynamik charakterisierenden Schwellwertes derart erfolgt, dass ein Verletzungsrisiko eines Fahrzeuginsassen und/oder eines Kollisionspartners verringert wird, **dadurch gekennzeichnet, dass**
der Schwellwert derart an die fahrerseitige Leistungsanforderung adaptiert wird, dass bei Überschreiten einer fahrerseitigen Reduzierung der Leistungsanforderung während des Vorliegens einer sicherheitskritischen Fahrdynamik die das Verletzungsrisiko reduzierende Ansteuerung der sicherheitsrelevanten Komponente (19, 29, 30, 31) erfolgt, wobei
der Schwellwert in Abhängigkeit einer Stellung eines Gaspedals als fahrerseitige Leistungsanforderung derart verändert wird, dass bei sportlicher Fahrweise, bei der unter bestimmten Umständen vordefinierte Auslöseschwellen überschritten werden, ohne dass wirklich eine sicherheitskritische Fahrsituation vorliegt, eine Ansteuerung der sicherheitsrelevanten Komponente vermieden wird.

2. Verfahren nach Anspruch 1,
**dadurch gekennzeichnet, dass**
ein einer Gaspedalstellung proportionales Signal zur Bewertung der aktuellen fahrerseitigen Leistungsanforderung herangezogen wird.

3. Verfahren nach Anspruch 1 oder 2,
**dadurch gekennzeichnet, dass**
zur Erfassung einer sicherheitskritischen Fahrdynamik charakterisierende Betriebszustandsgrößen mittels Sensoren detektiert und ausgewertet und mit dem mindestens eine Schwellwert verglichen werden und eine sicherheitskritische Fahrdynamik bei einem Überschreiten des Schwellwerts erkannt wird.

4. Verfahren nach einem der Ansprüche 1 bis 3,
**dadurch gekennzeichnet, dass**
die Ansteuerung der sicherheitsrelevanten Komponente (19, 29, 30, 31) in Abhängigkeit des Gradienten der Reduzierung der Leistungsanforderung erfolgt.

5. Verfahren nach einem der Ansprüche 1 bis 4,
**dadurch gekennzeichnet, dass**
die Ansteuerung der sicherheitsrelevanten Komponente (19, 29, 30, 31) in Abhängigkeit einer Zeitdauer zwischen einem Lösen eines Leistungsanforderungselementes und einem Betätigen eines Bremspedals erfolgt.

6. Verfahren nach Anspruch 4 oder 5,
**dadurch gekennzeichnet, dass**
aus dem zeitlichen Verlauf einer Gaspedalbetätigung, insbesondere aus der Geschwindigkeit eines Loslassens des Gaspedals, oder aus dem Zeitraum zwischen einem Lösen des Gaspedals und der Betätigung des Bremspedals auf ein Überschreiten einer fahrerseitigen Reduzierung der Leistungsanforderung geschlossen werden.

7. Verfahren nach einem der Ansprüche 1 bis 5,
**dadurch gekennzeichnet, dass**
der Schwellwert über eine Sprungfunktion oder eine Rampenfunktion adaptiert wird.

8. Verfahren nach Anspruch 1,
**dadurch gekennzeichnet, dass** die sicherheitsrelevante Komponente (19, 29, 30, 31) in Abhängigkeit einer ermittelten sicherheitskritischen Querdynamik angesteuert wird.

9. Verfahren zum Steuern wenigstens einer sicherheitsrelevanten Komponente eines Kraftfahrzeugs in Abhängigkeit einer über Sensoren detektierten Fahrdynamik des Kraftfahrzeugs, wobei die Ansteuerung der sicherheitsrelevanten Komponente in Abhängigkeit wenigstens eines vordefinierten und adaptierbaren sowie eine fahrsicherheitskritische Fahrdynamik charakterisierenden Schwellwertes derart erfolgt, dass ein Verletzungsrisiko eines Fahrzeuginsassen und/oder eines Kollisionspartners verringert wird, **dadurch gekennzeichnet, dass**
der Schwellwert derart an eine Auswertung von Körperreaktionen erfassenden Sensoren adaptiert wird, dass bei einer auf eine Not-/ Stresssituation hinweisenden Körperreaktion des Fahrers während des Vorliegens einer sicherheitskritischen Fahrdynamik die das Verletzungsrisiko reduzierende Ansteuerung der sicherheitsrelevanten Komponente (19, 29, 30, 31) erfolgt und
der Schwellwert in Abhängigkeit einer Stellung eines Gaspedals als fahrerseitige Leistungsanforderung derart verändert wird, dass bei sportlicher Fahrweise, bei der unter bestimmten Umständen vordefinierte Auslöseschwellen überschritten werden, ohne dass wirklich eine sicherheitskritische Fahrsituation vorliegt, eine Ansteuerung der sicherheitsrelevanten Komponente vermieden wird.

## Claims

1. Method for controlling at least one safety-relevant component of a motor vehicle in dependence on driving dynamics of the motor vehicle as detected by sensors, wherein the safety-relevant component is activated in dependence on at least one predefined and adaptable threshold value which characterises driving dynamics critical to driving safety such that a risk of injury to a vehicle occupant and/or to a collision partner is reduced,
**characterised in that**
the threshold value is so adapted to the driver-side performance requirement that the safety-relevant component (19, 29, 30, 31) reducing the risk of injury is activated if the driver reduces the performance requirements while safety-critical driving dynamics are present, wherein the threshold value is changed in dependence on an accelerator position representing a driver-side performance requirement such that in a sporty driving style, in which in certain circumstances predefined triggering thresholds are exceeded, an activation of the safety-relevant component is avoided.

2. Method according to claim 1,
**characterised in that**
a signal proportional to an accelerator position is used to assess the current driver-side performance requirement.

3. Method according to claim 1 or 2,
**characterised in that**
in order to detect safety-critical driving dynamics, characterising operating state variables are detected by means of sensors and evaluated and are compared to the at least one threshold value, and **in that** safety-critical driving dynamics are recognised if the threshold value is exceeded.

4. Method according to any of claims 1 to 3,
**characterised in that**
the safety-relevant component (19, 29, 30, 31) is activated in dependency on the gradient of the reduction of the performance requirement.

5. Method according to any of claims 1 to 4,
**characterised in that**
the safety-relevant component (19, 29, 30, 31) is activated in dependence on a duration between a release of a performance requirement element and an operation of a brake pedal.

6. Method according to claim 4 or 5,
**characterised in that**
conclusions can be drawn regarding an exceeding of a driver-side reduction of the performance requirement from the progression in time of an accelerator operation, in particular from the speed of accelerator release, or from the time between a release of the accelerator and the operation of the brake pedal.

7. Method according to any of claims 1 to 5,
**characterised in that**
the threshold value is adapted via a jump function or a ramp function.

8. Method according to claim 1,
**characterised in that**
the safety-relevant component (19, 29, 30, 31) is activated in dependence on detected safety-critical transverse dynamics.

9. Method for controlling at least one safety-relevant component of a motor vehicle in dependence on driving dynamics of the motor vehicle as detected by sensors, wherein the safety-relevant component is activated in dependence on at least one predefined and adaptable threshold value which characterises driving dynamics critical to driving safety such that a risk of injury to a vehicle occupant and/or to a collision partner is reduced,
**characterised in that**
the threshold value is so adapted to an evaluation of sensors detecting body reactions that the safety-relevant component (19, 29, 30, 31) reducing the risk of injury is activated at a body redaction indicating an emergency / stress situation while safety-critical driving dynamics are present, and **in that** the threshold value is changed in dependence on an accelerator position representing a driver-side performance requirement such that in a sporty driving style, in which in certain circumstances predefined triggering thresholds are exceeded, an activation of the safety-relevant component is avoided.

## Revendications

1. Procédé pour commander au moins un composant de véhicule automobile influant sur la sécurité, en fonction de la dynamique de roulement dudit véhicule détectée par l'intermédiaire de capteurs, la commande du composant influant sur la sécurité se fait en fonction d'au moins une valeur seuil prédéfinie, adaptable et caractérisant une dynamique de roulement critique pour la sécurité de roulement de telle sorte que le risque de blessure d'un passager du véhicule et / ou d'un antagoniste de collision soit réduit, **caractérisé en ce que** la valeur seuil est adaptée à l'exigence de performance côté conducteur de telle sorte qu'en cas de dépassement d'une réduction côté conducteur de l'exigence de performance en présence d'une dynamique de roulement critique pour la sécurité, la commande réduisant le risque de blessure du composant (19, 29, 30, 31) influant sur la sécurité se déclenche, la valeur seuil étant modifiée en fonction d'une positon d'un accélérateur comme exigence de performance côté conducteur de telle sorte qu'en cas de conduite sportive, durant laquelle dans certaines circonstances les seuils de déclenchement sont dépassés -sans qu'il n'existe aucune situation de conduite vraiment critique pour la sécurité - le composant influant sur la sécurité ne se déclenche pas.

2. Procédé selon la revendication 1, **caractérisé en ce qu'**un signal proportionnel à une position d'accélérateur est utilisé pour évaluer l'exigence de performance côté conducteur actuelle.

3. Procédé selon la revendication 1 ou 2, **caractérisé en ce que** pour enregistrer une dynamique de roulement critique pour la sécurité, des grandeurs d'état de fonctionnement caractérisant sont détectées et évaluées au moyen de capteurs et comparées à l'au moins une valeur seuil et **en ce qu'**une dynamique de roulement critique pour la sécurité est reconnue en cas de dépassement de la valeur seuil.

4. Procécé selon l'une quelconque des revendications 1 à 3, **caractérisé en ce que** la commande du composant (19, 29, 30, 31) influant sur la sécurité se déclenche en fonction du gradient de la réduction de l'exigence de performance.

5. Procédé selon l'une quelconque des revendications 1 à 4, **caractérisé en ce que** la commande du composant (19, 29, 30, 31) se déclenche en fonction d'une durée entre un déclenchement d'un élément d'exigence de performance et un actionnement d'une pédale du frein.

6. Procédé selon la revendication 4 ou 5, **caractérisé en ce qu'**on conclut un dépassement d'une réduction côté conducteur de l'exigence de performance à partir du temps de l'actionnement d'un accélérateur, en particulier à partir de la vitesse de relâchement de l'accélérateur ou à partir de la durée entre le relâchement de l'accélérateur et l'actionnement de la pédale de frein.

7. Procédé selon la revendication 1 à 5, **caractérisé en ce que** la valeur seuil est adaptée au moyen d'une fonction de saut ou une fonction de rampe.

8. Procédé selon la revendication 1, **caractérisé en ce que** le composant (19, 29, 30, 31) influant sur la sécurité est commandé en fonction d'une dynamique transversale détectée critique pour la sécurité.

9. Procédé pour commander au moins un composant de Véhicule automobile influant sur la sécurité, en fonction de la dynamique de roulement dudit véhicule détectée par l'intermédiaire de capteurs, la commande du compostant influant sur la sécurité se fait en jonction d'au moins une valeur seuil prédéfinie, adaptable et caractérisant une dynamique de roulement critique pour la sécurité de roulement de telle sorte que le risque de blessure d'un passager du véhicule et / ou d'un antagoniste de collision soit réduit, **caractérisé en ce que** la valeur seuil est adaptée à l'analyse résultant de capteurs détectant les réactions du corps de telle sorte qu'en cas de réaction du corps indiquant une situation de stress ou d'urgence du conducteur en présence d'une dynamique de roulement critique pour la sécurité, la commande du compostant (10, 29, 30, 31) influant sur la sécurité réduisant le risque de blessure se déclenche et la valeur seuil étant modifiée en fonction d'une position d'un accélérateur comme exigence de performance côté conducteur de telle sorte qu'en cas de conduite sportive, durant laquelle dans certaines circonstances les seuils de déclenchement sont dépassés - sans qu'il n'existe aucune situation de conduite vraiment critique pour la sécurité - le composant influant sur la sécurité ne se déclenche pars.
